# EUROPÄISCHE PATENTSCHRIFT

(11) **EP 2 570 685 B1**
(45) Veröffentlichungstag und Bekanntmachung des Hinweises auf die Patenterteilung: **06.06.2018**
(21) Anmeldenummer: 12182909.7
(22) Anmeldetag: 04.09.2012
(51) Int. Cl.: F16B 37/06

(54) **Nietelement**
Rivet element
Élément de rivet

(30) Priorität: 14.09.2011 DE 102011113436
(43) Veröffentlichungstag der Anmeldung: 20.03.2013
(73) Patentinhaber: Profil Verbindungstechnik GmbH & Co. KG, 61381 Friedrichsdorf (DE)
(72) Erfinder: Diehl, Oliver, 61350 Bad Homburg v.d.H. (DE); Dr. Humpert, Richard, 61231 Bad Nauheim (DE)
(74) Vertreter: Manitz Finsterwald Patentanwälte PartmbB

(56) Entgegenhaltungen:
- EP-A2- 1 229 254
- WO-A1-2004/085095
- DE-A1- 10 130 681
- DE-A1-102006 007 708
- DE-U1- 8 002 790
- JP-A- 2001 132 718
- JP-A- 2003 340 543
- US-A- 1 130 962

## Beschreibung

Die Erfindung betrifft ein Nietelement, ein Zusammenbauteil aus einem Nietelement und einem Bauteil aus Faserverbundwerkstoff sowie ein Verfahren zur Anbringung von Nietelementen in Bauteilen aus Faserverbundwerkstoffen.

Bei der Anbringung von Verbindungselementen wie insbesondere Nietelementen an Bauteilen aus Blech oder Faserverbundwerkstoffen ging man bislang davon aus, dass es erforderlich ist, in dem Bauteil eine Öffnung für das Verbindungselement auszubilden. Gerade bei Bauteilen aus Faserverbundwerkstoffen ist eine solche Vorgehensweise aber mit erheblichen Nachteilen verbunden, da durch die Öffnungen im Material Diskontinuitäten entstehen, die das Material gerade dort erheblich schwächen, wo aufgrund der Verbindungselemente eigentlich eine besonders hohe Materialfestigkeit benötigt wird.

Die DE 101 30 681 A1 offenbart eine selbstbohrende Blindnietmutter, die insbesondere zum Befestigen in kohlefaserverstärkten Kunststoffplatten geeignet ist. Die DE 10 2006 007 708 A1 offenbart ein Schussniet, der nach dem Durchdringen von zusammenzufügenden Blechen mittels eines Aufweitkörpers aufgeweitet wird. Der Aufweitkörper wirkt von innen auf eine Nietspitze des Schussniets.

Die US 1,130,962 betrifft ein Nietelement zum Zusammenheften eines Papierstapels. Das Nietelement wird dabei in ein vorbereitetes Loch eingeführt und anschließend umgeformt.

Die WO 2004/085095 A1 offenbart ein Nietelement, welches an einem unvorbereiteten Eisenplattenstapel befestigt wird.

Die JP 2001 132718 A offenbart ein Nietelement, das durch einen unvorbereiteten Plattenstapel gedrückt werden kann. Das einzudrückende Ende des Nietelements ist im Wesentlichen ein rohr- oder zylinderförmiger Abschnitt. Gleiches gilt für die EP 1 229 254 A2.

Aufgabe der Erfindung ist es, eine Möglichkeit zu schaffen, Verbindungselemente wie insbesondere Nietelemente derart an Bauteilen anzubringen, dass die Bauteile nicht in nachteiliger Weise geschwächt werden müssen, wobei es insbesondere möglich sein soll, Verbindungselemente in Bauteilen aus Faserverbundwerkstoffen anzubringen.

Diese Aufgabe wird durch die Erfindung gelöst, die ein Nietelement mit den Merkmalen des Anspruchs 1, ein Zusammenbauteil mit den Merkmalen des Anspruchs 7 sowie ein Verfahren mit den Merkmalen des Anspruchs 9 betrifft.

Das erfindungsgemäße Nietelement umfasst einen Nietabschnitt, der zumindest bereichsweise als mittels einer Matrize aufweitbarer, sich in Richtung einer Spitze verjüngender Dorn ausgebildet ist.

Durch die Ausbildung des Nietabschnitts als aufweitbarer Dorn ist es möglich, das Nietelement zunächst mit dem Dorn in das jeweilige Material einzudrücken, woraufhin der Dorn mittels einer geeignet geformten Matrize zur Herstellung einer Nietverbindung aufgeweitet wird.

Bei Bauteilen, die aus einem Material hergestellt sind, das zumindest in bestimmten Zuständen ein derartiges Eindrücken des Nietabschnitts ermöglicht, kann folglich auf die Herstellung einer Öffnung für das Nietelement verzichtet werden. Das erfindungsgemäße Nietelement ist folglich besonders geeignet für Bauteile aus Faserverbundwerkstoffen, die sich zumindest zeitweise in einem Zustand befinden, in welchem das Material ausreichend weich bzw. "teigig" ist. Hierauf wird nachstehend näher eingegangen. Ein weiterer Vorteil der Erfindung besteht darin, dass es nicht erforderlich ist, das Verbindungselement mit dem Bauteil zu verkleben.

In einer bevorzugten Ausgestaltung des Nietelementes umfasst der Nietabschnitt eine Mehrzahl von insbesondere zungenförmigen Segmenten, die gemeinsam den Dorn bilden und beim Aufweiten des Dornes auseinander bewegbar sind.

Die Segmente können miteinander verbunden sein, wobei an den Verbindungsstellen nach Art von Sollbruchstellen z.B. durch eine geringere Wandstärke jeweils eine gezielte Materialschwächung vorgesehen ist. Das Aufweiten des Dornes ist in diesem Fall mit einem Aufbrechen des Dornes verbunden, um die Segmente auseinander zu bewegen. Alternativ können die Segmente zumindest bereichsweise unverbunden sein und dabei entweder aneinander anliegen oder geringfügig voneinander beabstandet sein, so dass sie im Ausgangszustand gemeinsam den zum Eindrücken in das Bauteil dienenden Dorn bilden und anschließend mittels der Matrize ohne Aufbrechen von Material auseinander bewegt werden können.

Das erfindungsgemäße Zusammenbauteil umfasst ein erfindungsgemäßes Nietelement sowie ein Bauteil aus Faserverbundwerkstoff. Das Zusammenbauteil zeichnet sich dadurch aus, dass der Nietabschnitt des Nietelements das Bauteil mit einem wenigstens einmal gefalteten Bereich hintergreift. Hierdurch lässt sich eine besonders gute Sicherung gegen relativ hohe Ausdrückkräfte erzielen.

Bevorzugt erfolgt die Anbringung des Nietelements an dem Bauteil derart, dass am fertigen Zusammenbauteil überschüssiges Material des Bauteils das Nietelement an der dem Nietabschnitt entgegengesetzten Seite umgibt.

Die Matrize dient zur Anbringung erfindungsgemäßer Nietelemente und umfasst einen Aufweitabschnitt zum Aufweiten des Dorns des Nietelements, wobei der Aufweitabschnitt zumindest bereichsweise als Dorn ausgebildet ist.

Hierdurch kann auch die Matrize zunächst mit ihrem Dorn in das Bauteil eingedrückt werden, bevor das Zusammenwirken von Nietabschnitt und Matrize beginnt, d.h. bevor der Dorn des Nietabschnitts mittels des Dorns der Matrize zur Herstellung der gewünschten Nietverbindung aufgeweitet wird.

In einer besonders bevorzugten Ausgestaltung des Verfahrens ist vorgesehen, dass das Eindrücken des Nietelements und der Matrize in das Bauteil während der Herstellung des Bauteils erfolgt. Hierdurch kann zum einen die Anbringung des Nietelements im Rahmen der Herstellung des Bauteils erfolgen. Insbesondere ist es hierbei möglich, zur Herstellung des Bauteils eingesetzte Werkzeuge gleichzeitig dazu zu nutzen, die zum Eindrücken von Nietelement und Matrize sowie zum Zusammenwirken von Nietelement und Matrize erforderlichen Kräfte aufzubringen. Zum anderen kann ausgenutzt werden, dass bei der Herstellung von Bauteilen aus Faserverbundwerkstoffen das Material zumindest zeitweise prozessbedingt eine Konsistenz aufweist, die das Eindrücken der Dorne des Nietelements und der Matrize und somit die für die Herstellung der Nietverbindung erforderliche Materialverdrängung erlaubt.

Die Erfindung kann vorteilhafterweise sowohl in Verbindung mit Faserverbundwerkstoffen mit relativ kurzen Fasern als auch bei Werkstoffen mit relativ langen Fasern genutzt werden. Bauteile mit Kurzfasern können in einem Spritzgussverfahren hergestellt werden. Hierbei ist das Materialgemisch gut verformbar, so dass die bei der Herstellung dieser Bauteile eingesetzten Werkzeuge gleichzeitig zur Anbringung von Nietelementen genutzt werden können. Faserverbundteile mit Langfasern können durch Laminieren hergestellt werden, d.h. durch kreuzweises Auftragen von einzelnen Lagen mit gerichteten Fasern. Bei vielen Kunststoffmaterialien ist es dann möglich, ähnlich wie beim Tiefziehen von Blechen, die laminierten Teile unter Wärmeeinbringung mittels eines Werkzeugs in eine bestimmte Form zu pressen. Die dabei eingesetzten Pressen können dann gleichzeitig zum Einbringen des Nietelementes und der Matrize in das ausreichend weiche Verbundmaterial genutzt werden.

In beiden Fällen, also sowohl bei Kurzfaser- als auch bei Langfasermaterial, wird somit der Umstand ausgenutzt, dass das erfindungsgemäße Nietelement und die erfindungsgemäße Matrize in das prozessbedingt zumindest zeitweise ausreichend weiche Material eingedrückt werden können.

Bevorzugte Weiterbildungen der Erfindung sind auch in den abhängigen Ansprüchen, der Beschreibung sowie der Zeichnung angegeben.

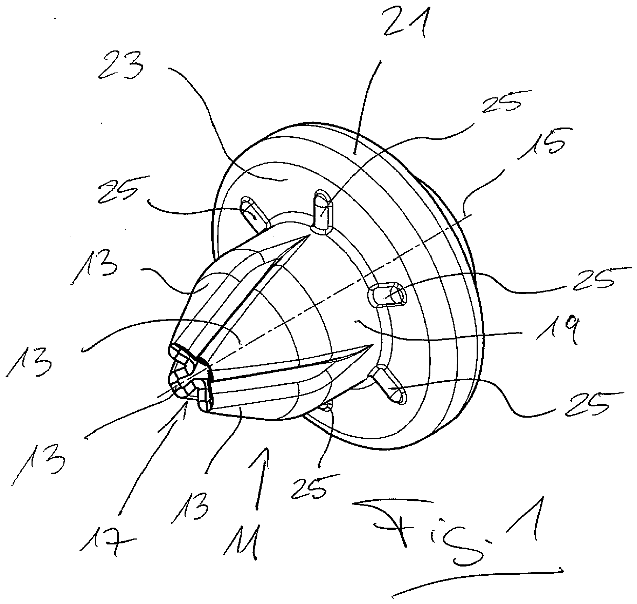

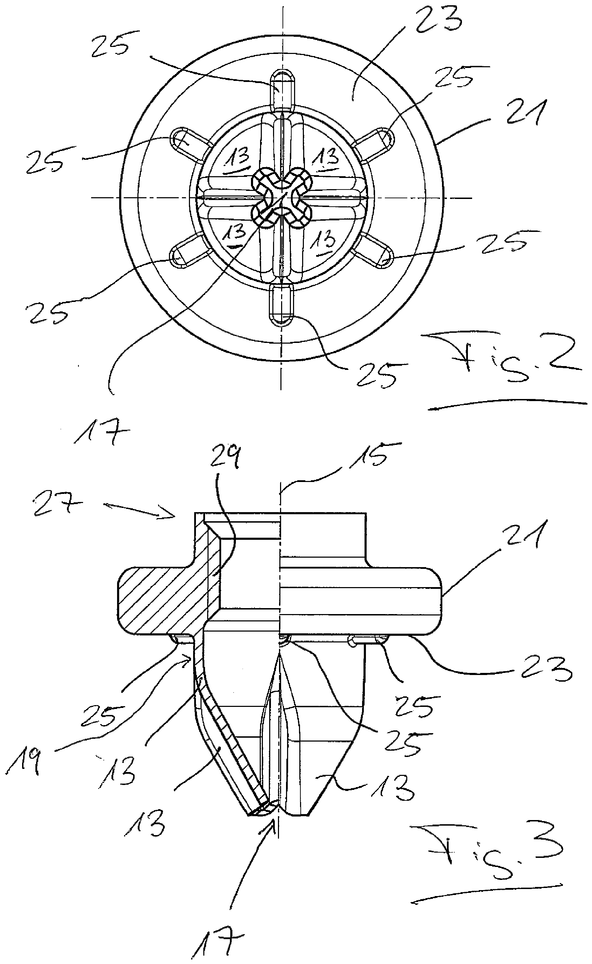

Die Erfindung wird im Folgenden beispielhaft unter Bezugnahme auf die Zeichnung beschrieben, deren Fig. 1 bis 7 verschiedene Ansichten eines erfindungsgemäßen Nietelements und einer Matrize sowie den Ablauf einer möglichen Anbringung eines erfindungsgemäßen Nietelements an einem Bauteil zeigen.

Die Fig. 1 bis 3 zeigen verschiedene Ansichten eins Ausführungsbeispiels eines erfindungsgemäßen Nietelements.

Das Nietelement umfasst einen Flanschabschnitt 21, der sich radial bezüglich einer Mittelachse 15 des Elements erstreckt. Auf der einen Seite des Flanschabschnitts 21 befindet sich ein Befestigungsabschnitt 27, der mit einem Innengewinde 29 versehen ist, das bis in den Flanschabschnitt 21 hineinreicht.

In diesem Ausführungsbeispiel ist das Nietelement folglich als Mutterelement ausgebildet. Dies ist jedoch nicht zwingend. In einer alternativen Ausführungsform kann das erfindungsgemäße Nietelement beispielsweise auch als Bolzenelement ausgebildet sein, das als Befestigungsabschnitt einen mit einem Außengewinde versehenen Bolzen aufweist.

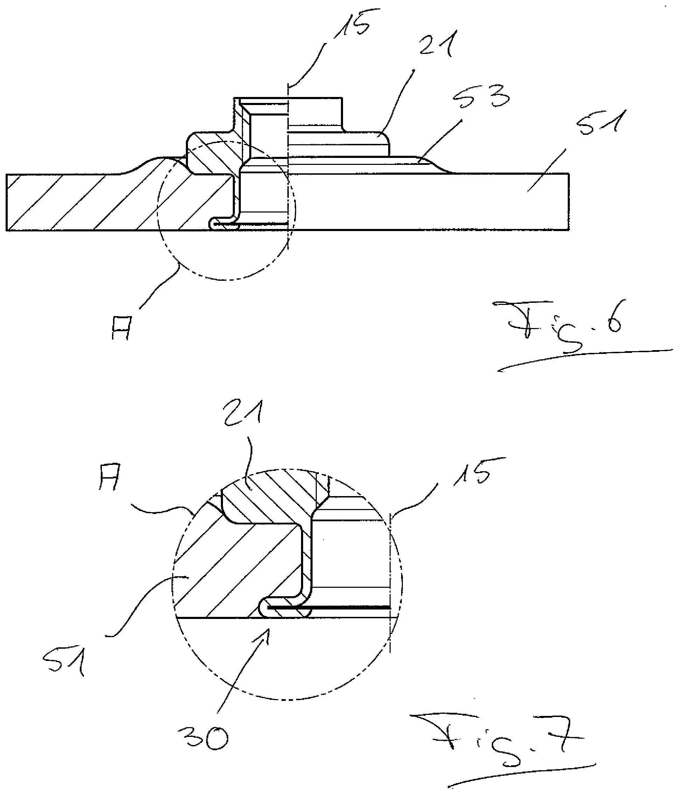

Die vom Befestigungsabschnitt 27 abgewandte Unterseite des Flanschabschnitts 21 dient als Anlagefläche 23 für ein Bauteil 51 (vgl. insbesondere Fig. 6), an welchem das Nietelement anzubringen ist. Die Anlagefläche 23 ist mit einer Mehrzahl von vorstehenden, sich in radialer Richtung erstreckenden Rippen 25 versehen, die als Verdrehsicherung dienen.

An der vom Befestigungsabschnitt 27 abgewandten Seite des Flanschabschnitts 21 erstreckt sich ein Nietabschnitt 11, dessen Außendurchmesser im Bereich der Anlagefläche 23 zumindest im Wesentlichen dem Außendurchmesser des zylindrischen Befestigungsabschnitts 27 entspricht.

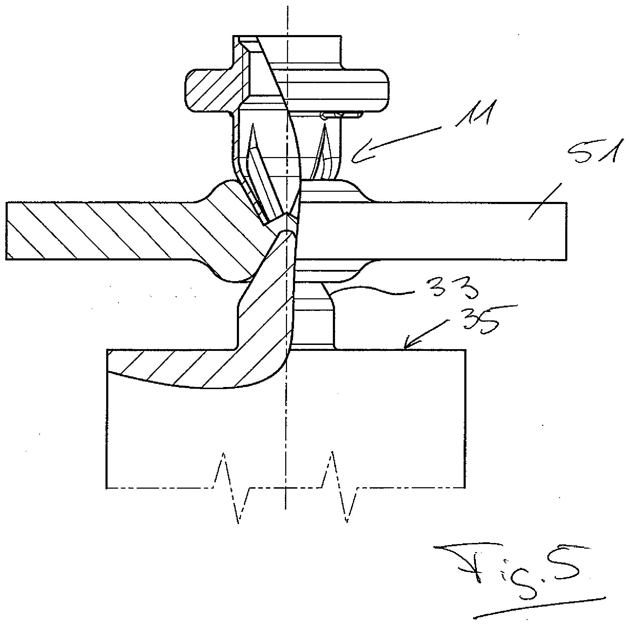

Ausgehend vom Flanschabschnitt 21 umfasst der Nietabschnitt 11 zunächst einen im Wesentlichen zylindrischen Abschnitt 19, der in einen sich in Richtung einer Spitze verjüngenden Dorn übergeht. An der Spitze des Dorns ist eine trichterförmige Einführhilfe 17 für eine Matrize 31 (vgl. insbesondere Fig. 5) ausgebildet.

Der Nietabschnitt 11 wird von einer Mehrzahl von zungenförmigen Segmenten 13 gebildet, die vom Flanschabschnitt 21 ausgehen und nach Art einer geschlossenen Knospe den sich verjüngenden Dorn des Nietabschnitts 11 bilden. Die in diesem Ausführungsbeispiel vier Segmente 13 sind folglich derart ausgebildet, dass sie sich ausgehend vom Flanschabschnitt 21 längs der Mittelachse 15 in Richtung der Spitze verschmälern.

Wie im Einleitungsteil erwähnt, können die Segmente 13 miteinander verbunden oder z.B. einander lediglich berührend unverbunden sein.

Der Dorn des Nietelements ermöglicht es, das Nietelement in ein ausreichend weiches Bauteil, an welchem das Nietelement anzubringen ist, einzudrücken, ohne dass es erforderlich ist, im Bauteil eine Öffnung für das Nietelement auszubilden.

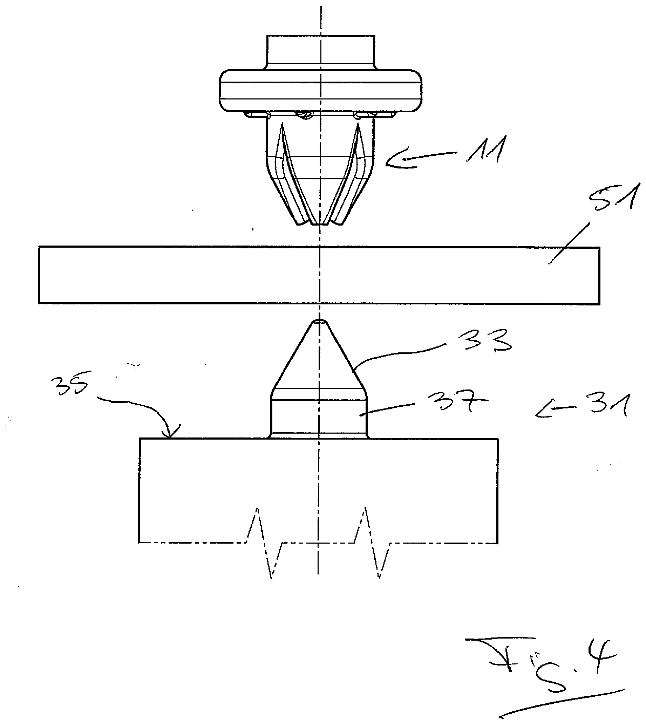

Einen möglichen Ablauf für die Anbringung eines erfindungsgemäßen Nietelements an einem Bauteil 51 mittels einer entsprechend ausgebildeten Matrize zeigen die Fig. 4 bis 7.

Die erfindungsgemäße Matrize 31 umfasst einen Abschnitt 33 zum Aufweiten des Dorns des Nietelements, wobei dieser Abschnitt 33 der Matrize ebenfalls einen als Dorn ausgebildeten Abschnitt aufweist, der in diesem Ausführungsbeispiel kreiskegelförmig ausgebildet ist. Folglich ist auch die erfindungsgemäße Matrize 31 in der Lage, mit ihrem Dorn in das Bauteil eingedrückt zu werden.

Zwischen einer senkrecht zu einer Mittelachse des Dorns verlaufenden Planfläche 35 der Matrize 31 und dem Dorn ist ein Zylinderabschnitt 37 ausgebildet.

Fig. 5 zeigt den Zustand, in welchem sowohl der Dorn des Nietelements als auch der Dorn der Matrize 31 in das Bauteil 51 eingedrückt sind, der Aufweitabschnitt 33 der Matrize 31 aber noch nicht damit begonnen hat, den Dorn des Nietelements aufzuweiten.

Insgesamt ist die Matrize insbesondere hinsichtlich der Durchmesser- und Winkelverhältnisse in Abstimmung mit dem Nietabschnitt 11 des Nietelements derart geformt, dass sich der in Fig. 6 gezeigte Endzustand ergibt. Durch das Zusammenwirken mit der Matrize wird der Dorn des Nietabschnitts 11 des Nietelements aufgeweitet, wodurch sich die Segmente 13 zum einen auseinander bewegen und zum anderen gefaltet werden, so dass sich an der Unterseite des Bauteils ein gefalteter Niet 30 ergibt. In dem dargestellten Ausführungsbeispiel schließt dieser Niet bündig mit der Unterseite des Bauteils 51 ab. Dies ist jedoch nicht zwingend. Alternativ kann der Niet auch an der Unterseite des Bauteils 51 vorstehen.

Wie Fig. 6 zeigt, wurde das Material des Bauteils 51 derart verdrängt, dass überschüssiges Material 53 kreisförmig an der Oberseite des Bauteils 51 um den Flanschabschnitt 21 herum vorsteht.

Während der gefaltete Niet 30 das Nietelement gegen Ausdrückkräfte sichert, sorgt der Flanschabschnitt 21 für eine Sicherung gegen Ausziehkräfte.

Wie im Einleitungsteil bereits erwähnt, erfolgt das Eindrücken des Nietelements und der Matrize 31 insbesondere mit Hilfe eines Werkzeugs, das zur Herstellung des jeweiligen Bauteils 51 verwendet wird. Das Einbringen des erfindungsgemäßen Nietelements kann folglich im Rahmen des ohnehin ablaufenden Herstellungsprozesses erfolgen. Dieser Herstellungsprozess bedingt insbesondere, dass das Material zumindest zeitweise derart warm und somit weich ist, dass das Nietelement und die Matrize 31 in das Material eingedrückt werden können.

Die Erfindung ermöglicht es also, Nietelemente insbesondere an auch als "Organobleche" bezeichneten Bauteilen aus Faserverbundwerkstoffen anzubringen, ohne dass in dem Material Öffnungen für die Nietelemente ausgebildet werden müssen. Nachteilige Schwächungen des Materials werden hierdurch in vorteilhafter Weise vermieden.

### Bezugszeichenliste

- 11: Nietabschnitt
- 13: Segment
- 15: Mittelachse
- 17: Einführhilfe
- 19: zylindrischer Abschnitt
- 21: Flanschabschnitt
- 23: Anlagefläche
- 25: Mittel zur Verdrehsicherung, Rippe
- 27: Befestigungsabschnitt
- 29: Innengewinde
- 30: gefalteter Niet
- 31: Matrize
- 33: Aufweitabschnitt
- 35: Planfläche
- 37: Zylinderabschnitt
- 51: Bauteil
- 53: überschüssiges Material

## Patentansprüche

1. Nietelement zum Eindrücken in ein unvorbereitetes, insbesondere nicht mit einer Öffnung für das Nietelement versehenes Bauteil, insbesondere in ein Bauteil (51) aus Faserverbundwerkstoff, mit einem Nietabschnitt (11), der zumindest bereichsweise als mittels einer Matrize (31) aufweitbarer, sich in Richtung einer Spitze verjüngender Dorn ausgebildet ist, wobei der Dorn an seiner Spitze eine, insbesondere trichterförmige, Einführhilfe (17) für die Matrize (31) aufweist.

2. Nietelement nach Anspruch 1,
**dadurch gekennzeichnet,**
**dass** der Nietabschnitt (11) im Wesentlichen einen kreisförmigen Querschnitt aufweist.

3. Nietelement nach Anspruch 1 oder 2,
**dadurch gekennzeichnet,**
**dass** der Nietabschnitt (11) eine Mehrzahl von, insbesondere zungenförmigen, Segmenten (13) umfasst, die gemeinsam den Dorn bilden und beim Aufweiten des Dornes auseinander bewegbar sind, wobei insbesondere sich die Segmente (13) jeweils längs einer Mittelachse (15) in Richtung der Dornspitze verschmälern.

4. Nietelement nach einem der vorhergehenden Ansprüche,
**dadurch gekennzeichnet,**
**dass** der Nietabschnitt (11) einen im Wesentlichen zylindrischen Abschnitt (19) aufweist, an den sich der Dorn anschließt.

5. Nietelement nach einem der vorhergehenden Ansprüche,
**dadurch gekennzeichnet,**
**dass** ein bezüglich des Nietabschnitts (11) radial vorstehender Flanschabschnitt (21) vorgesehen ist, der eine Anlagefläche (23) für das jeweilige Bauteil (51) aufweist, wobei insbesondere der Flanschabschnitt (21) mit, insbesondere rippenförmigen, Mitteln (25) zur Verdrehsicherung versehen ist.

6. Nietelement nach einem der vorhergehenden Ansprüche,
**dadurch gekennzeichnet,**
**dass** es als Mutterelement ausgebildet ist.

7. Zusammenbauteil aus einem Nietelement nach einem der vorhergehenden Ansprüche und einem Bauteil (51) aus Faserverbundwerkstoff, wobei der Dorn des Nietabschnitts (11) des Nietelementes aufgeweitet ist und der Nietabschnitt (11) des Nietelementes das Bauteil (51) mit einem wenigstens einmal gefalteten Bereich hintergreift.

8. Zusammenbauteil nach Anspruch 7,
**dadurch gekennzeichnet,**
**dass** überschüssiges Material (53) des Bauteils (51) das Nietelement an der dem Nietabschnitt (11) entgegengesetzten Seite umgibt.

9. Verfahren zur Anbringung von Nietelementen gemäß zumindest einem der Ansprüche 1 bis 6 in Bauteilen (51) aus Faserverbundwerkstoffen, bei dem ein Nietelement und eine Matrize (31) jeweils mit einem als Dorn ausgebildeten Abschnitt in ein unvorbereitetes, insbesondere nicht mit einer Öffnung für das Nietelement versehenes, Bauteil (51) gedrückt werden und der Dorn des Nietelementes mittels des Dornes der Matrize (31) zur Herstellung einer Nietverbindung aufgeweitet wird.

10. Verfahren nach Anspruch 9,
**dadurch gekennzeichnet,**
**dass** das Eindrücken des Nietelementes und der Matrize (31) in das Bauteil (51) während der Herstellung des Bauteils (51) erfolgt, insbesondere mittels eines Werkzeugs zur Herstellung des Bauteils (51), wobei das Werkzeug insbesondere zur Herstellung des Bauteils (51) im Spritzgussverfahren oder zum Verformen des Bauteils (51) vorgesehen ist.

11. Verfahren nach Anspruch 9 oder 10,
**dadurch gekennzeichnet,**
**dass** der Nietabschnitt (11) des Nietelementes zumindest bereichsweise wenigstens einmal gefaltet wird.

## Claims

1. A rivet element for pressing into a component which is not prepared and which is in particular not provided with an opening for the rivet element, in particular into a component (51) of fiber composite material, comprising a rivet section (11) which is formed at least regionally as a spike which can be dilated by means of a die button (31) and which tapers in the direction of a tip,
wherein
the spike has an introduction aid (17) for the die button (31) at its tip, in particular a funnel-shaped introduction aid.

2. A rivet element in accordance with claim 1,
**characterized in that**
the rivet section (11) has a substantially circular cross-section.

3. A rivet element in accordance with claim 1 or claim 2,
**characterized in that**
the rivet section (11) comprises a plurality of segments (13), in particular tongue-like segments, which jointly form the spike and which can be moved apart from one another during the dilation of the spike,
with in particular the segments (13) each becoming narrower along a central axis (15) in the direction of the tip of the spike.

4. A rivet element in accordance with any one of the preceding claims,
**characterized in that**
the rivet section (11) has a substantially cylindrical portion (19) which is followed by the spike.

5. A rivet element in accordance with any one of the preceding claims,
**characterized in that**
a flange section (21) is provided which projects radially with respect to the rivet section (11) and which has a contact surface (23) for the respective component (51), with in particular the flange section (21) being provided with means (25), in particular rib-shaped means, for providing security against rotation.

6. A rivet element in accordance with any one of the preceding claims,
**characterized in that**
it is configured as a nut element.

7. A component assembly comprising a rivet element in accordance with any one of the preceding claims and a component (51) of fiber composite material, wherein the spike of the rivet section (11) of the rivet element is dilated and the rivet section (11) of the rivet element engages behind the component (51) with a region which is folded at least once.

8. A component assembly in accordance with claim 7,
**characterized in that**
excess material (53) of the component (51) surrounds the rivet element at the side opposite to the rivet section (11).

9. A method for the attachment of rivet elements in accordance with at least one of the claims 1 to 6 in components (51) of fiber composite materials in which a rivet element and a die button (31) are each pressed with a section formed as a spike into a component (51), which is not prepared and which is in particular not provided with an opening for the rivet element, and the spike of the rivet element is dilated by means of the spike of the die button (31) to establish a rivet connection.

10. A method in accordance with claim 9,
**characterized in that**
the pressing of the rivet element and of the die button (31) into the component (51) takes place during the manufacture of the component (51), in particular by means of a tool for manufacturing the component (51), with the tool in particular being provided for the manufacture of the component (51) in an injection molding process or for the shaping of the component (51).

11. A method in accordance with claim 9 or claim 10,
**characterized in that**
the rivet section (11) of the rivet element is at least regionally folded at least once.

## Revendications

1. Élément de rivetage pour l'enfoncement dans une pièce non préparée, en particulier dépourvue d'une ouverture pour l'élément de rivetage, en particulier dans une pièce (51) en matériau composite à fibres, comportant une portion de rivetage (11) qui est réalisée au moins localement sous forme de mandrin qui peut être évasé au moyen d'une matrice (31) et qui se rétrécit en direction d'une pointe,
dans lequel
au niveau de sa pointe, le mandrin présente un organe d'aide à l'introduction (17) pour la matrice (31), qui est en particulier en forme d'entonnoir.

2. Élément de rivetage selon la revendication 1,
**caractérisé en ce que**
la portion de rivetage (11) présente une section transversale sensiblement circulaire.

3. Élément de rivetage selon la revendication 1 ou 2,
**caractérisé en ce que**
la portion de rivetage (11) comprend une pluralité de segments (13) en particulier en forme de languette qui constituent conjointement le mandrin et qui sont écartables lors de l'évasement du mandrin, et en particulier les segments (13) se rétrécissent le long d'un axe médian (15) en direction de la pointe du mandrin.

4. Élément de rivetage selon l'une des revendications précédentes,
**caractérisé en ce que**
la portion de rivetage (11) présente une portion sensiblement cylindrique (19) à laquelle se raccorde le mandrin.

5. Élément de rivetage selon l'une des revendications précédentes,
**caractérisé en ce que**
il est prévu une portion de bride (21) qui fait saillie radialement par rapport à la portion de rivetage (11) et qui présente une surface d'appui (23) pour la pièce respective (51), et en particulier la portion de bride (21) est pourvue de moyens (25) de blocage anti-rotation en particulier en forme de nervures.

6. Élément de rivetage selon l'une des revendications précédentes,
**caractérisé en ce que**
il est réalisé sous forme d'élément formant écrou.

7. Pièce assemblée constituée par un élément de rivetage selon l'une des revendications précédentes et par une pièce (51) en matériau composite à fibres, dans laquelle le mandrin de la portion de rivetage (11) de l'élément de rivetage est évasé et la portion de rivetage (11) de l'élément de rivetage engage par l'arrière la pièce (51) par une zone pliée au moins une fois.

8. Pièce assemblée selon la revendication 7,
**caractérisé en ce que**
le matériau excédentaire (53) de la pièce (51) entoure l'élément de rivetage sur le côté opposé à la portion de rivetage (11).

9. Procédé de montage d'éléments de rivetage selon l'une au moins des revendications 1 à 6 dans des pièces (51) en matériaux composites à fibres, dans lequel un élément de rivetage et une matrice (31) sont enfoncés chacun avec une portion réalisée sous forme de mandrin dans une pièce (51) non préparée, en particulier dépourvue d'une ouverture pour l'élément de rivetage, et le mandrin de l'élément de rivetage est évasé au moyen du mandrin de la matrice (31) pour réaliser une liaison par rivetage.

10. Procédé selon la revendication 9,
**caractérisé en ce que**
l'enfoncement de l'élément de rivetage et de la matrice (31) dans la pièce (51) s'effectue pendant la réalisation de la pièce (51), en particulier au moyen d'un outil de réalisation de la pièce (51), l'outil étant prévu en particulier pour la réalisation de la pièce (51) par un procédé de coulée par injection ou pour la déformation de la pièce (51).

11. Procédé selon la revendication 9 ou 10,
**caractérisé en ce que**
la portion de rivetage (11) de l'élément de rivetage est pliée au moins localement au moins une fois.
